# EUROPÄISCHE PATENTANMELDUNG

(11) **EP 1 769 956 A1**
(43) Veröffentlichungstag der Anmeldung: **04.04.2007**
(21) Anmeldenummer: 06016785.5
(22) Anmeldetag: 11.08.2006
(51) Int. Cl.: B60J 5/10, F16F 7/104

(54) **Heckklappe eines Kraftfahrzeugs**

(30) Priorität: 30.09.2005 DE 102005046891
(71) Anmelder: Dr.Ing. h.c.F. Porsche Aktiengesellschaft, 70435 Stuttgart (DE)
(72) Erfinder: Soja, Heinz, Dr., 71263 Weil der Stadt (DE); Gönüldinc, Okan, 73760 Ostfildern (DE); Erdelitsch, Georg, 75446 Wiernsheim (DE); Mehdiyoun, Ray, 71665 Vaihingen (DE); Ocker, Jörg, 73547 Lorch (DE)

(57) **Zusammenfassung**

Die Erfindung betrifft eine Heckklappe (7) eines Kraftfahrzeugs (1), die einen als FederMasse-System ausgeführten Schwingungstilger (33) aufweist.

Um ein Schwingen der Heckklappe (7) im Fahrbetrieb zumindest zu reduzieren, ist vorgesehen, dass der Schwingungstilger (33) als separates Bauteil an der Heckklappe (7) befestigt ist.

## Beschreibung

Bei der Erfindung wird ausgegangen von einer Heckklappe eines Kraftfahrzeugs, die einen als Feder-Masse-System ausgeführten Schwingungstilger aufweist, gemäß Oberbegriff des Patentanspruchs 1.

Eine gattungsbildende Heckklappe ist aus der DE 195 24 160 C1 ersichtlich. Dort bildet die Heckklappe selbst die Tilgermasse, die über ein Feder/Dämpfersystem gegenüber dem Rohbau des Kraftfahrzeugs abgestützt ist. Das Feder/Dämpfersystem stellt somit zusammen mit der Tilgermasse das Feder-Masse-System dar. Das Feder/Dämpfersystem bei der bekannten Heckklappe ist als Gummielement ausgeführt, auf welchem der Schlossbügel des Heckklappenschlosses abgestützt ist. Alternativ kann die die Karosserieöffnung umgebende Dichtung, auf der die Heckklappe aufliegt, als Feder/Dämpfersystem dienen.

Aus der DE 40 30 990 A1 geht ein Feder-Masse-System als Schwingungstilger hervor, der in einem Windschutzscheibenrahmen eines Cabriolets angeordnet ist.

Aufgabe der Erfindung ist es, eine Heckklappe der eingangs genannten Art anzugeben, die bei einfachem Aufbau in ihrem Schwingungsverhalten ausreichend bedämpft ist.

Gelöst wird diese Aufgabe mit einer Heckklappe eines Kraftfahrzeugs, die die in Anspruch 1 genannten Merkmale aufweist. Weitere Ausgestaltungen der Erfindung sind in den Unteransprüchen angegeben.

Die mit der Erfindung hauptsächlich erzielten Vorteile sind darin zu sehen, dass eine Abstimmung der separaten Tilgermasse auf die Heckklappe einfach möglich ist. So kann der erfindungsgemäße Schwingungstilger, der als separates Bauteil an der Heckklappe befestigt ist, beispielsweise auf unterschiedlich ausgestattete Heckklappen angepasst werden, da diese ein unterschiedliches Gewicht aufweisen können. Insbesondere können Zusatzausstattungen des Kraftfahrzeugs das Gewicht der Heckklappe beeinflussen.

Derartige Zusatzausstattungen können beispielsweise optional vorgesehene Scheibenwischer, Öffnungshilfen für die Heckklappe, unterschiedliche Heckscheiben für die Heckklappe, oder dergleichen sein. Bei der aus dem Stand der Technik bekannten Heckklappe können diese Zusatzausstattungen zu einer Verstimmung des Feder-Masse-Systems führen, wodurch gegebenenfalls die Tilgerwirkung nicht mehr zufriedenstellend ausfällt. Es hat sich ferner gezeigt, dass der erfindungsgemäße Schwingungstilger auch für Heckklappen einsetzbar ist, die in Fahrzeugen mit einem Aufbau nach Art eines Coupés eingesetzt sind; bei derartigen Fahrzeugen liegt die Heckklappe in einer Ebene, die gegenüber einer gedachten Horizontalebene nur um einen geringen Winkel geneigt ist. Bei derartigen Anordnungen kann die Heckklappe verstärkt zu Schwingungen neigen. Es hat sich jedoch gezeigt, dass mit dem erfindungsgemäßen Schwingungstilger auch derartige Heckklappen so bedämpft werden können, dass die im Stand der Technik beschriebenen Wummergeräusche innerhalb des Kraftfahrzeugs vollständig verhindert oder zumindest weitestgehend vermieden werden können.

Nach einer in Anspruch 2 angegebenen Weiterbildung ist vorteilhaft, dass die Bedämpfung der Heckklappe mit einer relativ geringen Tilgermasse erfolgen kann.

Bei einem in Anspruch 3 angegebenen Ausführungsbeispiel wird der in vielen Fällen bereits vorhandene Raum zwischen Außenblech und Innenblech der Heckklappe zur Anordnung des Schwingungstilgers genutzt. Zusätzlicher Einbauraum für den Schwingungstilger muss also nicht bereitgestellt werden.

Besonders bevorzugt wird ein Ausführungsbeispiel mit den in Anspruch 4 angegebenen Merkmalen, nach dem der Schwingungstilger in eine Aussparung an dem Innenblech eingesetzt ist. Der Schwingungstilger kann demnach an dem die Aussparung umgebenden Rand aufgehängt werden.

Bei einem in Anspruch 5 angegebenen Ausführungsbeispiel wird der Schwingungstilger von einer Innenverkleidung abgedeckt.

Um den Schwingungstilger dauerhaft und sicher aufhängen zu können, ist der Rand, der die Aussparung umgibt, vorzugsweise umlaufend, verstärkt ausgeführt, wie dies in den Ansprüchen 6 bzw. 7 angegeben ist. Die Verstärkung des Randes kann beispielsweise durch ein Innenblech gebildet werden, welches im Bereich dieses Randes mit einer größeren Materialstärke als in übrigen Bereichen ausgeführt ist. Derartige Bleche werden auch als Tailored Blanks bezeichnet. Besonders bevorzugt wird jedoch ein Ausführungsbeispiel, bei dem die Verstärkung des Randes durch ein separates Verstärkungsteil gebildet wird, welches auf das Innenblech aufgesetzt wird. Dieses Verstärkungsteil wird vorzugsweise als umlaufender Rahmen ausgeführt und mit dem Innenblech der Heckklappe verbunden. Dabei kann das Verstärkungsteil als Blechteil ausgeführt sein, was in Anspruch 10 angegeben ist.

Um einen vergrößerten Einbauraum für den Schwingungstilger bereitzustellen, kann der Rand der Aussparung als Ausstülpung ausgeführt sein bzw. eine Ausstülpung aufweisen. Somit liegt zwischen Innenblech und Außenblech ein vergrößerter Raum vor.

Die Erfindung wird nachfolgend anhand eines Ausführungsbeispiels mit Bezug auf die Zeichnung näher erläutert. Es zeigen:
Fig. 1 in perspektivischer Ansicht ein Kraftfahrzeug mit einer Heckklappe und
Fig. 2 eine Ansicht von innen auf die Heckklappe.

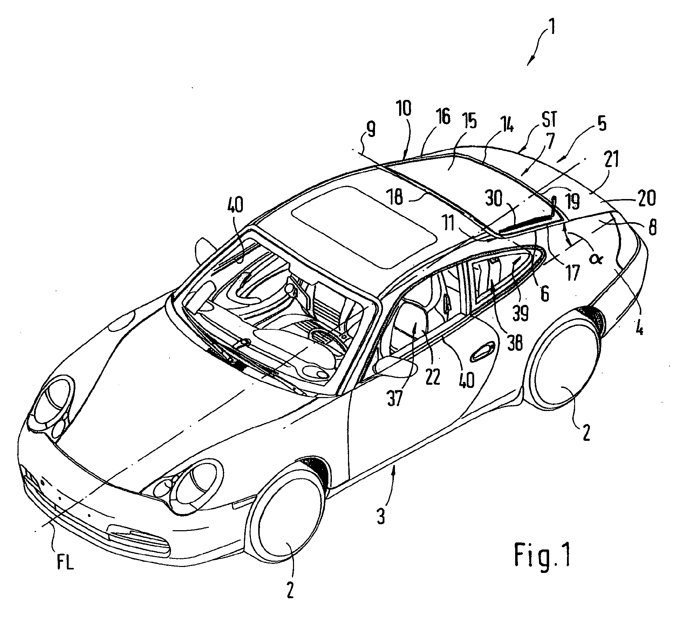

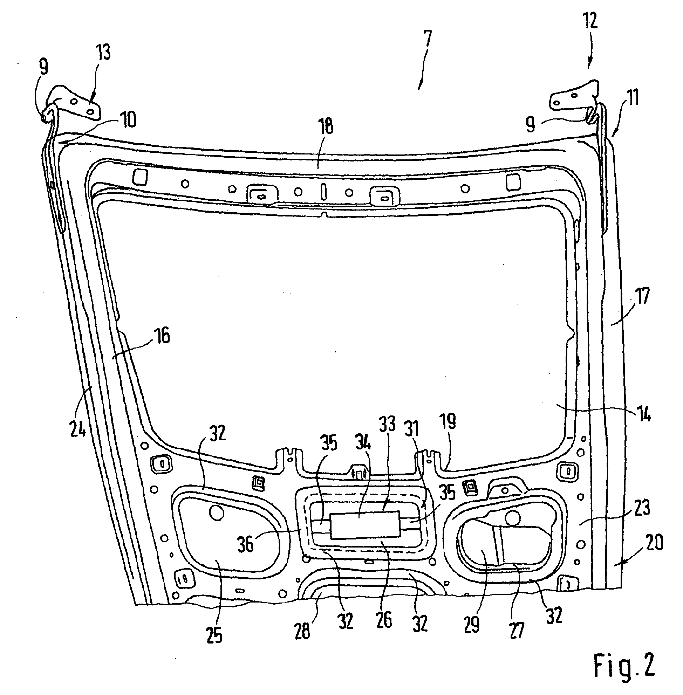

Ein in Fig. 1 dargestelltes Kraftfahrzeug 1 umfasst einen von Rädern 2 getragenen Aufbau 3 mit einer Karosserie 4, die im Heckbereich 5 eine Karosserieöffnung 6 aufweist, in die eine Heckklappe 7 eingesetzt ist. Die Heckklappe ist in Fig. 1 in Schließstellung ST gezeigt, in der sie im Wesentlichen bündig mit der Außenhaut 8 der Karosserie 4 liegt. Die Heckklappe 7 kann um eine Schwenkachse 9, die quer zu einer Fahrzeuglängsachse FL verläuft, in eine Öffnungsstellung (nicht dargestellt) geklappt werden. Hierfür sind in den oberen Eckbereichen 10 und 11 der Heckklappe 7 Scharniere 12 und 13 (siehe Fig. 2) angebracht, die außerdem mit dem Aufbau 3 verbunden sind. Die großflächige Heckklappe 7 weist einen Scheibenausschnitt 14 auf, in den eine Heckscheibe 15 fest eingesetzt ist. Der Scheibenausschnitt 14 wird begrenzt von seitlichen Rahmenteilen 16 und 17, die in den Eckbereichen 10 und 11 über ein Querrahmenteil 18 miteinander verbunden sind. An einen unteren Begrenzungsrand 19 des Scheibenausschnitts 14 schließt sich noch ein undurchsichtiger Abschnitt 20 der Heckklappe 7 an. Der Abschnitt 20 wird gebildet von einem Außenblech, welches auch die Rahmenteile 16 und 17 und das Rahmenquerteil 18 aufweist. Das Außenblech 21 weist mithin den Scheibenausschnitt 14 auf. Zur Unterstützung des Außenblechs 21 ist an dessen dem Fahrzeuginnenraum 22 zugewandten Seite ein Innenblech 23 befestigt, welches ebenfalls den Scheibenausschnitt 14 aufweist. Vorzugsweise zumindest am äußeren Heckklappenrand 24 sind Innenblech 23 und Außenblech 21 miteinander fest verbunden. Ein unter dem Abschnitt 20 liegender Teilbereich des Innenblechs 23 weist ein oder mehrere Aussparungen 25, 26, 27, 28 auf, von denen die Aussparung 26 benachbart zum unteren Begrenzungsrand 19 und etwa auf der Fahrzeuglängsachse FL liegt, also etwa mittig in dem Innenblech 23 ausgebildet ist. Bezogen auf die in Richtung der Fahrzeuglängsachse FL gemessene Länge der Heckklappe 7 ist die Aussparung 26 ebenfalls etwa mittig an der Heckklappe 7 ausgebildet. In eine andere, insbesondere seitliche Aussparung 25 oder 27 kann ein Antriebsmotor 29 für einen Heckscheibenwischer 30 (Fig. 1) eingesetzt sein.

Die mittige Aussparung 26 wird von einem Rand 31 begrenzt, der eine in Richtung Fahrzeuginnenraum 22 gerichtete Ausstülpung 32 aufweist, die im Übrigen auch für die anderen Aussparungen 25, 27, 28 vorgesehen sein kann. Die Ausstülpung 32 bildet mithin eine Erhebung auf der dem Fahrzeuginnenraum 22 zugewandten Innenseite des Innenblechs 23 und vergrößert den zwischen Innenblech 23 und Außenblech 21 vorhandenen Zwischenraum.

In die mittigen Aussparung 26 ist als separates Bauteil ein Schwingungstilger 33 eingesetzt, der als Feder-Masse-System ausgeführt ist und daher eine Tilgermasse 34 und zumindest ein Federelement 35 als Aufhängung aufweist. Im gezeigten Ausführungsbeispiel ist die Tilgermasse 34 mittels zwei Federelementen 35 aufgehängt. Hierzu sind die Federelemente 35, die eine Dämpfungswirkung aufweisen können, mit dem Rand 31 des Innenblechs 23 verbunden, so dass der Schwingungstilger 33 innerhalb der mittleren Aussparung 26 zu liegen kommt. Dabei ist der Schwingungstilger 33 so an dem Innenblech 23 befestigt, dass er zumindest abschnittweise in dem von dem Außenblech 21 und Innenblech 23 begrenzten Zwischenraum innerhalb der Heckklappe 7 zu liegen kommt. Für ein sicheres Aufhängen des Schwingungstilgers 33 ist der Rand 31 der Aussparung 26 verstärkt ausgeführt. Diese Verstärkung kann streifenförmig bzw. rahmenartig die Aussparung 26 umgeben. Die Verstärkung ist auf der dem Fahrzeuginnenraum 22 zugewandten Innenseite des Innenblechs 23 als separates Verstärkungsteil 36 in Form eines umlaufenden Rahmens ausgeführt, der fest mit dem Innenblech 23 verbunden wird. Der umlaufende Rahmen des Verstärkungsteils 36 ist vorzugsweise als Blechteil ausgeführt. Denkbar wäre es alternativ, das Verstärkungsteil 36 an der Seite des Innenblechs 23 zu befestigen, die dem Außenblech 21 zugewandt liegt. In einer weiteren Ausführungsform könnte das Innenblech 23 auch als Tailored Blank ausgeführt sein, welches im Bereich des Randes 31 als Verstärkungsteil 36 einen Materialabschnitt mit größerer Materialdicke aufweist. Vorzugsweise erstreckt sich das streifenförmige Verstärkungsteil 36 über die gesamte Ausstülpung 32 der Aussparung 26.

An der dem Fahrzeuginnenraum 22 zugewandten Innenseite des Innenblechs 23 kann noch eine hier nicht gezeigte Innenverkleidung für die Heckklappe angebracht sein, wodurch die an der Heckklappe 7 montierten Teile, wie beispielsweise der Antriebsmotor 29 und der Schwingungstilger 33 von dieser Innenverkleidung abgedeckt sind.

Wie Fig. 1 noch zeigt, ist das Kraftfahrzeug 1 als Personenwagen ausgeführt und es weist im Fahrzeuginnenraum 22 hinter einer vorderen Sitzreihe 37 oder hinteren Sitzreihe 38 einen Laderaum 39 bzw. Gepäckraum auf, der von der Heckklappe 7 nach oben hin verschlossen oder freigegeben wird. Der Aufbau 3 des Kraftfahrzeugs 1 ist insbesondere als Coupé mit einem relativ flach nach hinten abfallenden Heckbereich 5 realisiert. Die Heckklappe 7 liegt deshalb in einer Ebene, die zu einer gedachten Horizontalebene, in der beispielsweise eine Gürtellinie 40 des Aufbaus 3 liegt, einen Winkel α einnimmt, der kleiner 90°, insbesondere kleiner 45° ist und beispielsweise zwischen 10° und 35° liegt.

## Patentansprüche

1. Heckklappe (7) eines Kraftfahrzeugs (1), die einen als Feder-Masse-System ausgeführten Schwingungstilger (33) aufweist, **dadurch gekennzeichnet, dass** der Schwingungstilger (33) als separates Bauteil an der Heckklappe (7) befestigt ist.

2. Heckklappe nach Anspruch 1, **dadurch gekennzeichnet, dass** der Schwingungstilger (33) etwa mittig an der Heckklappe (7) befestigt ist.

3. Heckklappe nach Anspruch 1 oder 2, **dadurch gekennzeichnet, dass** die Heckklappe (7) zumindest ein Außenblech (21) und ein Innenblech (23) aufweist und dass der Schwingungstilger (33) zwischen Außenblech (21) und Innenblech (23) angeordnet ist.

4. Heckklappe nach Anspruch 3, **dadurch gekennzeichnet, dass** das Innenblech (23) eine Aussparung (26) aufweist und dass der Schwingungstilger (33) in die Aussparung (26) eingesetzt ist.

5. Heckklappe nach Anspruch 3 oder 4, **dadurch gekennzeichnet, dass** das Innenblech (23) mit einer Innenverkleidung abgedeckt ist.

6. Heckklappe nach Anspruch 4, **dadurch gekennzeichnet, dass** ein die Aussparung (26) umgebender Rand (31) des Innenblechs (23) verstärkt ausgeführt ist und dass der Schwingungstilger (33) an diesem Rand (31) aufgehängt ist.

7. Heckklappe nach Anspruch 6, **dadurch gekennzeichnet, dass** der Rand (31) der Aussparung (26) umlaufend verstärkt ist.

8. Heckklappe nach Anspruch 6 oder 7, **dadurch gekennzeichnet, dass** auf das Innenblech (23) ein Verstärkungsteil (36) aufgesetzt ist, das den Rand (31) der Aussparung (26) verstärkt.

9. Heckklappe nach Anspruch 8, **dadurch gekennzeichnet, dass** das Verstärkungsteil (36) als umlaufender Rahmen ausgeführt ist.

10. Heckklappe nach Anspruch 8 oder 9, **dadurch gekennzeichnet, dass** das Verstärkungsteil (36) als Blechteil ausgeführt ist.

11. Heckklappe nach Anspruch 6, 7 oder 8, **dadurch gekennzeichnet, dass** der Rand (31) der Aussparung (26) eine Ausstülpung (32) aufweist.
